# EUROPEAN PATENT APPLICATION

(11) **EP 4 738 983 A1**
(43) Date of publication of application: **06.05.2026**
(21) Application number: 24848087.3
(22) Date of filing: 23.07.2024
(51) Int. Cl.: H04W 76/40, H04W 76/14

(54) **COMMUNICATION SYSTEM, NETWORKING METHOD, AND RELATED APPARATUS**

(30) Priority: 28.07.2023 CN 202310940648
(71) Applicant: Huawei Technologies Co., Ltd., Shenzhen, Guangdong 518129 (CN)
(72) Inventor: WU, Weikun, Shenzhen, Guangdong 518129 (CN); WANG, Jian, Shenzhen, Guangdong 518129 (CN)
(74) Representative: Isarpatent
(86) International application number: PCT/CN2024/106931
(87) International publication number: WO 2025/026129

(57) **Abstract**

This application provides a communication system, a networking method, and a related apparatus. The communication system includes a primary node and a secondary node, the secondary node is a node providing service content or a service, the primary node is a node using the service content or the service, and feature information of the secondary node is configured on the primary node. The primary node sends a broadcast message, and the broadcast message indicates the feature information. The secondary node receives the broadcast message. The secondary node sends a connection request message to the primary node based on the feature information indicated by the broadcast message. The primary node receives the connection request message, and establishes a communication connection to the secondary node based on the connection request message. Certainty and efficiency of the communication connection can be improved by using this solution.

## Description

This application claims priority to Chinese Patent Application No. 202310940648.6, filed with the China National Intellectual Property Administration on July 28, 2023 and entitled "COMMUNICATION SYSTEM, NETWORKING METHOD, AND RELATED APPARATUS", which is incorporated herein by reference in its entirety.

### TECHNICAL FIELD

This application relates to the field of communication technologies, and in particular, to a communication system, a networking method, and a related apparatus.

### BACKGROUND

With continuous development of global communication technologies, wireless communication technologies have surpassed wired communication technologies in a development speed and application, and present a booming development trend. Smart devices such as smart transportation devices, smart home devices, and robots are gradually entering daily life of people. The smart devices may be networked by using a wireless communication technology to form a wireless communication network. Networking modes of the wireless communication network may include a networking mode of one primary node and a plurality of secondary nodes, and the like. The networking mode is a networking mode in which the secondary node discovers the primary node for communication connection. However, in consideration of costs and flexibility, it is usually difficult to preset an association configuration of the primary node in the secondary node before delivery. In addition, in an environment like a parking lot, a production and maintenance workshop, or a shopping mall, there are a large quantity of smart devices in same space covered by wireless signals. If the plurality of smart devices further include a primary node other than a target primary node to which a secondary node is to be connected, the primary node interferes with a connection between the secondary node and the target primary node.

### SUMMARY

This application provides a communication system, a networking method, and a related apparatus. In this way, in a networking scenario in which a secondary node discovers a primary node for a communication connection, interference from another redundant primary node can be eliminated. Therefore, the secondary node can determine the primary node to which the communication connection is to be established, to improve certainty and efficiency of the communication connection.

According to a first aspect, this application provides a communication system. The communication system includes a primary node and a secondary node, the secondary node is a node providing service content or a service, the primary node is a node using the service content or the service, and feature information of the secondary node is configured on the primary node.

The primary node sends a broadcast message, and the broadcast message indicates the feature information.

The secondary node receives the broadcast message.

The secondary node sends a connection request message to the primary node based on the feature information indicated by the broadcast message.

The primary node receives the connection request message, and establishes a communication connection to the secondary node based on the connection request message.

Optionally, the secondary node does not broadcast the feature information.

The foregoing solution is applied to a networking scenario in which the secondary node discovers the primary node to perform the communication connection (which is embodied by a feature that the primary node sends the broadcast message, and the secondary node responds to the broadcast message to make a request to the primary node to establish the communication connection). In the networking scenario, an existing implementation solution cannot resolve a problem of how to accurately select the primary node to establish the communication connection after the secondary node receives broadcast messages of a plurality of primary nodes. In this solution, the feature information of the secondary node is indicated in the broadcast message of the primary node. In this way, the secondary node learns that the broadcast message is a message to which the secondary node needs to respond, and therefore filters out a broadcast message of another primary node. This can accurately implement the communication connection between the secondary node and the primary node, and reduce interference of the another primary node.

In a possible implementation, the primary node has a human-computer interaction interface for configuring the feature information, and the secondary node does not have a human-computer interaction interface.

In the foregoing solution, because the primary node has the human-computer interaction interface, the feature information of the secondary node may be configured on the primary node through the human-computer interaction interface. In this way, the primary node can add feature indication information of the secondary node to the broadcast message. In addition, because the secondary node does not have the human-computer interaction interface, in a scenario in which the broadcast messages of the plurality of primary nodes are received at the same time, the primary node to which the communication connection is established cannot be selected manually. The feature indication information of the secondary node carried in the broadcast message may help the secondary node accurately determine the primary node to which the communication connection is established, thereby eliminating the interference from the another primary node.

In a possible implementation, the primary node receives the feature information from a configuration auxiliary device. The configuration auxiliary device obtains the feature information by scanning an identifier nameplate, a silkscreen, a tag code, or a two-dimensional code of the secondary node. Alternatively, the configuration auxiliary device obtains the feature information by establishing a communication connection to the secondary node.

In the foregoing solution, the feature information of the secondary node may be configured on the primary node via the configuration auxiliary device, thereby improving efficiency of configuring the feature information.

In a possible implementation, the feature information includes at least one piece of the following content: first identification information of the secondary node, second identification information of an object bound to the secondary node, third identification information of a group to which the secondary node belongs, type information of the secondary node, or attribute information of the secondary node.

In the foregoing solution, the feature information of the secondary node includes a plurality of types of information. This extends an actual application scenario of this solution and enhances practicability of this solution. Particularly, the feature information of the secondary node includes the second identification information of the object bound to the secondary node or the third identification information of the group to which the secondary node belongs. In this implementation, a group of secondary nodes may be bound to and associated with the object or the group, and the group of secondary nodes can accurately determine, based on the second identification information of the object or the third identification information of the group, the primary node to which the communication connection is established. In other words, the broadcast message sent by the primary node does not need to carry identification information of each of the group of secondary nodes, and only needs to carry the identification information of the object or the group, thereby saving transmission resources.

In a possible implementation, the feature information is indicated in a vendor-defined data field of the broadcast message.

In the foregoing solution, the feature information of the secondary node is indicated in the vendor-defined data field. In this way, an existing communication standard can be compatible, and the practicability of this solution is enhanced.

In a possible implementation, after the secondary node establishes the communication connection to the primary node, the secondary node sends check information to the primary node, and the check information indicates the feature information.

The primary node receives the check information, and checks a status of communication with the secondary node based on the check information.

In the foregoing solution, the feature information of the secondary node stored in the primary node may be repeatedly used to check the status of the communication between the primary node and the secondary node. This reduces additional overheads of performing communication check based on other different information.

In a possible implementation, the feature information is configured on the secondary node.

The primary node sends deletion indication information to the secondary node.

The secondary node receives deletion indication information, and deletes the feature information based on the deletion indication information.

In the foregoing solution, when the primary node needs to replace the secondary node or delete the secondary node, the primary node may send, to the secondary node, the indication information for deleting the feature information of the secondary node, to release storage space of the secondary node. Particularly, if the feature information is the second identification information of the object bound to the secondary node or the third identification information of the group to which the secondary node belongs, after deleting the second identification information or the third identification information, the secondary node further removes a binding relationship with the object or the group.

According to a second aspect, this application provides a networking method. The method includes:

A secondary node receives a broadcast message from a primary node. The broadcast message indicates feature information of the secondary node, the secondary node is a node providing service content or a service, and the primary node is a node using the service content or the service.

The secondary node sends a connection request message to the primary node based on the feature information indicated by the broadcast message. The connection request message is used to request to establish a communication connection to the primary node.

Optionally, the secondary node does not broadcast the feature information.

In a possible implementation, the primary node has a human-computer interaction interface for configuring the feature information, and the secondary node does not have a human-computer interaction interface.

In a possible implementation, the feature information includes at least one piece of the following content:
first identification information of the secondary node, second identification information of an object bound to the secondary node, third identification information of a group to which the secondary node belongs, type information of the secondary node, or attribute information of the secondary node.

In a possible implementation, the feature information is indicated in a vendor-defined data field of the broadcast message.

In a possible implementation, the method further includes:
The secondary node sends check information to the primary node after the secondary node establishes the communication connection to the primary node. The check information indicates the feature information, and the check information is used to check a status of communication between the secondary node and the primary node.

In a possible implementation, the feature information is configured on the secondary node, and the method further includes:
The secondary node receives deletion indication information, and deletes the feature information based on the deletion indication information.

According to a third aspect, this application provides a networking method. The method includes:
A primary node sends a broadcast message. The broadcast message indicates feature information of a secondary node, the secondary node is a node providing service content or a service, and the primary node is a node using the service content or the service.

The primary node receives a connection request message from the secondary node. The connection request message is used to request to establish a communication connection to the primary node.

Optionally, the secondary node does not broadcast the feature information.

In a possible implementation, the primary node has a human-computer interaction interface for configuring the feature information, and the secondary node does not have a human-computer interaction interface.

In a possible implementation, the feature information includes at least one piece of the following content:
first identification information of the secondary node, second identification information of an object bound to the secondary node, third identification information of a group to which the secondary node belongs, type information of the secondary node, or attribute information of the secondary node.

In a possible implementation, the feature information is indicated in a vendor-defined data field of the broadcast message.

In a possible implementation, the method further includes:
The primary node receives check information from the secondary node after the secondary node establishes the communication connection to the primary node. The check information indicates the feature information, and the check information is used to check a status of communication between the secondary node and the primary node.

In a possible implementation, the feature information is configured on the secondary node, and the method further includes:

The primary node sends a deletion indication information to the secondary node. The deletion indication information indicates deletion of the feature information.

According to a fourth aspect, this application provides a communication node. The communication node includes:
a receiving unit, configured to receive a broadcast message from a primary node, where the broadcast message indicates feature information of the communication node, the communication node is a node providing service content or a service, and the primary node is a node using the service content or the service; and
a sending unit, configured to send a connection request message to the primary node based on the feature information indicated by the broadcast message, where the connection request message is used to request to establish a communication connection to the primary node.

Optionally, the communication node does not broadcast the feature information.

In a possible implementation, the primary node has a human-computer interaction interface for configuring the feature information, and the communication node does not have a human-computer interaction interface.

In a possible implementation, the feature information includes at least one piece of the following content:
first identification information of the communication node, second identification information of an object bound to the communication node, third identification information of a group to which the communication node belongs, type information of the communication node, or attribute information of the communication node.

In a possible implementation, the feature information is indicated in a vendor-defined data field of the broadcast message.

In a possible implementation, the sending unit is further configured to: send check information to the primary node after the communication node establishes the communication connection to the primary node. The check information indicates the feature information, and the check information is used to check a status of communication between the communication node and the primary node.

In a possible implementation, the feature information is configured on the communication node. The receiving unit is further configured to receive deletion indication information. The communication node further includes a deletion unit that is configured to delete the feature information based on the deletion indication information.

According to a fifth aspect, this application provides a communication node. The communication node includes:
a sending unit, configured to send a broadcast message, where the broadcast message indicates feature information of a secondary node, the secondary node is a node providing service content or a service, and the communication node is a node using the service content or the service; and
a receiving unit, configured to receive a connection request message from the secondary node, where the connection request message is used to request to establish a communication connection to the communication node.

Optionally, the secondary node does not broadcast the feature information.

In a possible implementation, the communication node has a human-computer interaction interface for configuring the feature information, and the secondary node does not have a human-computer interaction interface.

In a possible implementation, the feature information includes at least one piece of the following content:
first identification information of the secondary node, second identification information of an object bound to the secondary node, third identification information of a group to which the secondary node belongs, type information of the secondary node, or attribute information of the secondary node.

In a possible implementation, the feature information is indicated in a vendor-defined data field of the broadcast message.

In a possible implementation, the receiving unit is further configured to: receive check information from the secondary node after the secondary node establishes the communication connection to the communication node. The check information indicates the feature information, and the check information is used to check a status of communication between the secondary node and the communication node.

In a possible implementation, the feature information is configured on the secondary node. The sending unit is further configured to send deletion indication information to the secondary node. The deletion indication information indicates deletion of the feature information.

According to a sixth aspect, this application provides a communication node. The communication node includes a processor and a memory. The memory is coupled to the processor. When executing a computer program or computer instructions stored in the memory, the processor can implement the method according to any implementation of the second aspect. The communication node may further include a communication interface. The communication interface is used by the communication node to communicate with another apparatus (for example, another communication node in a same communication system). For example, the communication interface may be a transceiver, a circuit, a bus, a module, or another type of communication interface.

In a possible implementation, the communication node may include:
the memory, configured to store the computer program or the computer instructions; and
a processor, configured to: receive a broadcast message from a primary node through the communication interface, where the broadcast message indicates feature information of a secondary node, the secondary node is a node providing service content or a service, and the primary node is a node using the service content or the service; and send a connection request message to the primary node based on the feature information indicated by the broadcast message through the communication interface, where the connection request message is used to request to establish a communication connection to the primary node.

It should be noted that, in this application, the computer program or the computer instructions in the memory may be pre-stored, or may be downloaded from the Internet and stored when the communication node is used. A source of the computer program or the computer instructions in the memory is not specifically limited in this application. The coupling in embodiments of this application may be an indirect coupling or connection between units or modules in an electrical form, a mechanical form, or another form, and is used for information exchange between the units or the modules.

According to a seventh aspect, this application provides a communication node. The communication node includes a processor and a memory. The memory is coupled to the processor. When executing a computer program or computer instructions stored in the memory, the processor can implement the method according to any implementation of the third aspect. The communication node may further include a communication interface. The communication interface is used by the communication node to communicate with another apparatus (for example, another communication node in a same communication system). For example, the communication interface may be a transceiver, a circuit, a bus, a module, or another type of communication interface.

In a possible implementation, the communication node may include:
the memory, configured to store the computer program or the computer instructions; and
a processor, configured to: send a broadcast message through the communication interface, where the broadcast message indicates feature information of a secondary node, the secondary node is a node providing service content or a service, and a primary node is a node using the service content or the service; and receive a connection request message from the secondary node through the communication interface, where the connection request message is used to request to establish a communication connection to the primary node.

It should be noted that, in this application, the computer program or the computer instructions in the memory may be pre-stored, or may be downloaded from the Internet and stored when the communication node is used. A source of the computer program or the computer instructions in the memory is not specifically limited in this application. The coupling in embodiments of this application may be an indirect coupling or connection between units or modules in an electrical form, a mechanical form, or another form, and is used for information exchange between the units or the modules.

According to an eighth aspect, this application provides a computer-readable storage medium. The computer-readable storage medium stores a computer program or computer instructions, and when the computer program or the computer instructions are executed by the processor, the method according to any implementation of the second aspect is implemented.

According to a ninth aspect, this application provides a computer-readable storage medium. The computer-readable storage medium stores a computer program or computer instructions, and when the computer program or the computer instructions are executed by the processor, the method according to any implementation of the third aspect is implemented.

According to a tenth aspect, an embodiment of this application provides a computer program product. When the computer program product is executed by a processor, the method according to any implementation of the second aspect is implemented.

According to an eleventh aspect, an embodiment of this application provides a computer program product. When the computer program product is executed by a processor, the method according to any implementation of the third aspect is implemented.

The solutions provided in the second aspect to the eleventh aspect are for implementing or collaboratively implementing the system provided in the first aspect, and therefore, can achieve advantageous effect the same as or corresponding to those in the first aspect. Details are not described herein again.

### BRIEF DESCRIPTION OF DRAWINGS

FIG. 1 is a diagram of a structure of a communication system;
FIG. 2 is a diagram of a structure of a truck;
FIG. 3 is a diagram of a scenario of a plurality of trucks;
FIG. 4 is a schematic flowchart of a networking method;
FIG. 5 to FIG. 7 are diagrams of structures of vendor-defined fields;
FIG. 8A and FIG. 8B are a schematic flowchart of configuring information on a secondary node;
FIG. 9 is a diagram of an overall logical framework of a networking method;
FIG. 10A to FIG. 12 are schematic flowcharts of actual application of a networking method;
FIG. 13 is a schematic view of replacing a trailer;
FIG. 14 is a schematic flowchart of actual application of a networking method; and
FIG. 15 to FIG. 18 are diagrams of structures of communication nodes.

### DESCRIPTION OF EMBODIMENTS

In embodiments of this application, "a plurality of" means two or more than two. In embodiments of this application, "and/or" is used to describe an association relationship between associated objects, and represents three relationships that may exist independently. For example, A and/or B may represent the following: Only A exists, only B exists, or both A and B exist. A description manner like "at least one (or at least one piece) of a1, a2, ..., and an" used in embodiments of this application includes a case in which any one of a1, a2, ..., and an exists alone, and also includes any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

The following describes embodiments of this application by using examples with reference to the accompanying drawings.

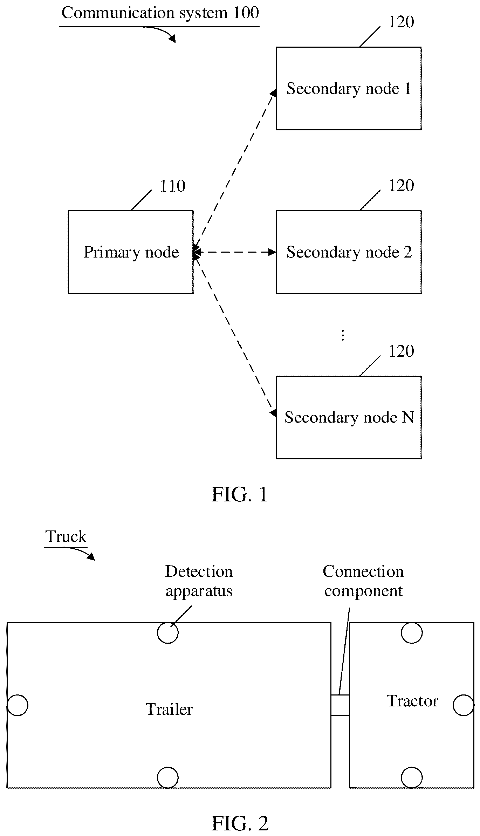

FIG. 1 shows an example of a communication system 100. The communication system 100 includes one primary node 110 and N secondary nodes 120 (N is an integer greater than or equal to 1). A wireless communication connection may be established between the primary node 110 and the N secondary nodes 120, to implement data communication and exchange. The primary node 110 and the secondary node 120 may be collectively referred to as communication nodes in the communication system 100.

In the communication system 100, the secondary node 120 is a node providing service content or a service. The primary node 110 is a node using the service content or the service provided by the secondary node 120. For example, the service content or the service, provided by the secondary node 120, used by the primary node 110 includes at least one of the following: The primary node 110 obtains the service content (for example, service content like an image or a video) provided by the secondary node 120 and performs corresponding processing and the like, and the primary node 110 controls the secondary node 120 to provide the corresponding service (for example, controls a corresponding secondary node to provide a service like audio playing in a speaker mode, audio and video playing, or light adjustment). It may be understood that the description of using, by the primary node 110, the service content or the service provided by the secondary node 120 is merely an example herein, and does not constitute a limitation on embodiments of this application.

The primary node 110 may also be referred to as a central node of the communication system 100. The secondary node 120 may also be referred to as a device-side node of the communication system 100. For example, the primary node 110 may be a grant (grant, G) node in the spark link basic (Spark Link Basic, SLB) standard. The secondary node 120 may be a terminal (terminal, T) node in the SLB. It may be understood that this is merely an example, and does not constitute a limitation on embodiments of this application.

For ease of understanding a relationship between the primary node 110 and the secondary node 120, the following describes the relationship by using an example.

For example, the primary node 110 may be a vehicle, and the secondary node 120 may be a detection apparatus. For example, the detection apparatus may include a sensor like a camera or a radar. The radar may include, for example, various types of radars such as an ultrasonic radar, a lidar, a millimeter-wave radar, or a microwave radar. This is not limited in embodiments of this application. The detection apparatus may provide service content like a shot image or video for the vehicle. The vehicle may obtain the service content like the image or the video to implement another function (for example, analyzing an ambient road condition based on the image or the video). For example, the vehicle may be, for example, any type of vehicle traveling on a road, for example, a car, a bus, a coach, a truck, a fire engine, a police car, a sanitation vehicle, an agitator truck, a truck (referred to as a motor truck or a motortruck), a waste-collection vehicle, or a forklift truck. For ease of understanding, an example in which the primary node is the truck is used. For example, refer to FIG. 2.

As shown in FIG. 2, the truck includes two parts: a tractor and a trailer. The tractor and the trailer are physically connected via a connection component. The tractor is configured to provide power to help the trailer overcome frictional resistance of a road surface. In a possible implementation, the tractor may further power the trailer and perform data communication. The trailer is configured to load cargoes. In addition, a plurality of detection apparatuses (circles in FIG. 2 indicate the detection apparatuses) may be deployed around the tractor and the trailer, to implement a 360-degree panoramic view system. It may be understood that a quantity of detection apparatuses shown in FIG. 2 is merely an example, and does not constitute a limitation on embodiments of this application. For example, because the tractor of the truck has a human-computer interaction function, a data processing function, and a control function, the tractor may be used as the primary node. Secondary nodes are the detection apparatuses deployed around the truck. In another possible implementation, if the trailer has a human-computer interaction function, a data processing function, and a control function, the trailer may be used as the primary node. In another possible implementation, if both the tractor and the trailer have human-computer interaction functions, data processing functions, and control functions, the tractor and the trailer may be considered as a whole as the primary node.

For example, in another possible implementation, when the primary node 110 is the vehicle, the secondary node 120 may be a speaker. The vehicle may control the speaker to provide a service of audio playing in a speaker mode. In another possible implementation, when the primary node 110 is the vehicle, the secondary node 120 may be an atmosphere light. The vehicle may control the atmosphere light to provide a lighting service of a featured atmosphere.

For example, in another possible implementation, when the secondary node 120 is the detection apparatus, the speaker, or the atmosphere light, the primary node 110 is not limited to the vehicle, and may be a terminal device associated with and bound to the vehicle. The terminal device may include, for example, a mobile phone (mobile phone), a wearable device, a tablet computer (pad), or a computer (for example, a notebook computer or a palmtop computer) having a data receiving and sending function. A specific form of the terminal device is not limited in embodiments of this application.

For example, in another possible implementation, the secondary nodes 120 may alternatively be smart home devices, for example, including an audio and video device, an intelligent lighting device, a smart curtain, an air conditioner, a security protection system, a digital theater, an audio and video server, a movie cabinet, and a network appliance. The primary node 110 may be a terminal device that can be configured to control a service provided by the smart home device. For the terminal device, refer to the foregoing description as an example. Details are not described herein again.

It may be understood that the primary node 110 and the secondary node 120 are merely examples, and do not constitute a limitation on embodiments of this application. A secondary node 120 and a primary node 110 belong to the primary node and the secondary node in embodiments of this application provided that the secondary node 120 is the node providing the service content or the service, and the primary node 110 is the node using the service content or the service provided by the secondary node 120.

The communication system may be applied to a plurality of application scenarios, for example, mobile internet (mobile internet, MI), industrial control (industrial control), self-driving (self-driving), transportation safety (transportation safety), internet of things (internet of things, IoT), a smart city (smart city), or a smart home (smart home). In some application scenarios, a name of a device having a similar communication capability may not be referred to as a node. However, for ease of description, devices having communication capabilities are collectively referred to as nodes in embodiments of this application.

For example, a wireless communication system (for example, the communication system 100) may implement networking by using a device discovery technology. The device discovery is a technology that enables one device to detect existence of another device. The device discovery may include a plurality of implementation solutions. The following uses the primary node and the secondary node as examples for description.

In an implementation solution, the primary node discovers the secondary node. Specifically, the secondary node may send a broadcast message, and the primary node may discover existence of the secondary node based on the broadcast message. For example, in a Bluetooth wireless communication technology, a secondary node (for example, a Bluetooth headset, a Bluetooth mouse, or a Bluetooth keyboard) providing service content or a service may broadcast a message, and a primary node (for example, a mobile phone or a computer) that uses the service content or the service may receive the broadcast message, to discover existence of the secondary node based on the broadcast message. For another example, in a wireless fidelity (wireless fidelity, Wi-Fi) communication technology, a secondary node (for example, a Wi-Fi access device like a router, a base station, or a mobile hotspot) providing service content or a service may broadcast a message, and a primary node (for example, a mobile phone or a computer) that uses the service content or the service may receive the broadcast message, to discover existence of the secondary node based on the broadcast message.

In another implementation solution, the secondary node discovers the primary node. Specifically, the primary node may send a broadcast message, and the secondary node may discover existence of the primary node based on the broadcast message. In this way, the secondary node requests to establish a communication connection to the primary node. For example, in an SLB communication technology, a primary node (for example, a vehicle) obtaining service content or a service sends a broadcast message, and a secondary node (for example, a camera, a speaker, or an atmosphere light) providing the service content or the service may receive the broadcast message, to discover the primary node and request to establish a communication connection to the primary node. In this way, the secondary node may provide the corresponding service content or the corresponding service for the primary node. It may be understood that a solution in which the secondary node discovers the primary node is not limited to being implemented in the SLB communication technology, and may alternatively be implemented in another wireless communication technology. This is not limited in embodiments of this application.

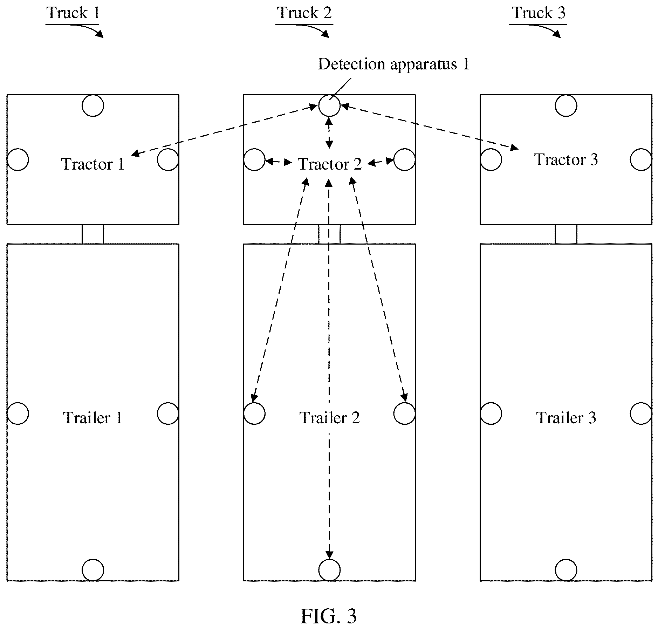

In the device discovery solution in which the secondary node discovers the primary node, the primary node sends the broadcast message, and the secondary node does not send a broadcast message used for device discovery. In addition, in consideration of costs and flexibility, it is usually difficult to preset association configuration information of the primary node in the secondary node before delivery. In this case, in an environment like a parking lot, a production and maintenance workshop, or a shopping mall, there are a large quantity of smart devices in same space covered by wireless signals. If the plurality of smart devices further include a primary node other than a target primary node to which a secondary node is to be connected, a broadcast message sent by the another primary node interferes with a connection between the secondary node and the target primary node. For ease of understanding, for example, refer to FIG. 3.

In FIG. 3, a tractor of a truck is a primary node, and a detection apparatus (a circle in FIG. 3 indicates a detection apparatus) deployed on the truck is a secondary node. FIG. 3 shows an example of three trucks, and the three trucks are closely parked. A truck 2 is used as an example. In the truck 2, an expected networking objective is that a tractor 2 sends a broadcast message, and in response to the broadcast message, detection apparatuses on the tractor 2 and a trailer 2 may request to establish communication connections to the tractor 2. However, because the three trucks are close to each other, if the tractor 2 sends the broadcast message, a tractor 1 of a truck 1 and a tractor 3 of a truck 3 also send broadcast messages. The detection apparatus (for example, a detection apparatus 1) on the truck 2 receives three broadcast messages. Consequently, the detection apparatus 1 does not know which broadcast message to respond to. To be specific, the broadcast messages sent by the tractor 1 and the tractor 3 interfere with the detection apparatus 1, and consequently the detection apparatus 1 cannot determine an object to which a communication connection is established.

Based on the foregoing description, to eliminate the interference to improve certainty and efficiency of the communication connection, an embodiment of this application provides a networking method. In the method, feature information of a secondary node may be indicated in a broadcast message of a primary node. In this way, the secondary node learns that the broadcast message is a message to which the secondary node needs to respond, and therefore filters out a broadcast message of another primary node. This can accurately implement a communication connection between the secondary node and the primary node, and reduce interference. The following describes an example of an implementation process of the method.

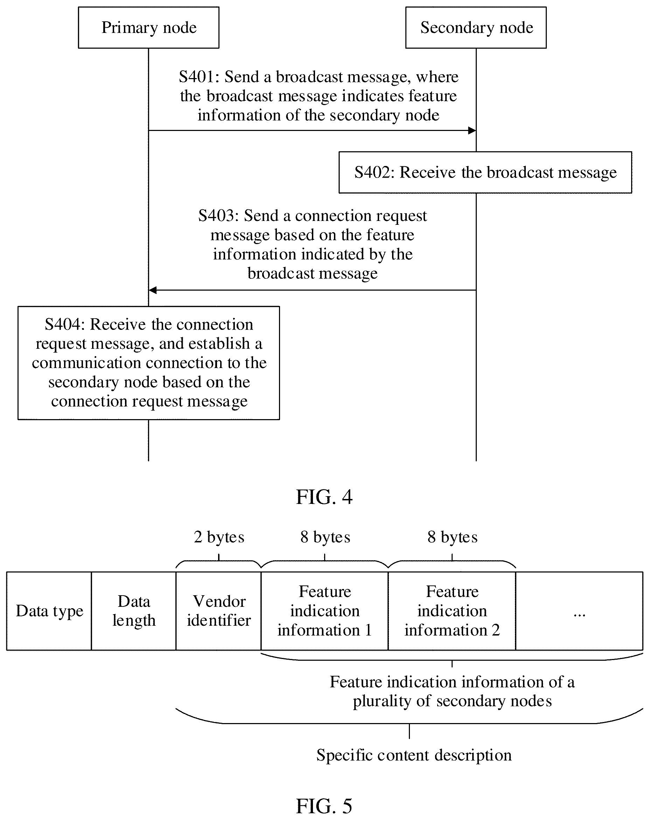

FIG. 4 is a schematic flowchart of a networking method according to an embodiment of this application. The method may include but is not limited to the following steps.

S401: A primary node sends a broadcast message, where the broadcast message indicates feature information of a secondary node.

For example, the primary node may be, for example, the primary node 110 in the communication system 100, and the secondary node may be, for example, any secondary node 120 in the communication system 100.

During specific implementation, the feature information of the secondary node may be configured on the primary node first. For details about a configuration process, refer to the following description. The feature information may include at least one piece of the following content: first identification information of the secondary node, second identification information of an object bound to the secondary node, third identification information of a group to which the secondary node belongs, type information of the secondary node, or attribute information of the secondary node.

The first identification information of the secondary node may include, for example, a unique number or a name of the secondary node.

The second identification information of the object bound to the secondary node may include, for example, a unique number or a name of the object. For example, the object may be a device on which the secondary node is mounted. For example, it is assumed that the secondary node is the foregoing detection apparatus. The object may be the foregoing trailer mounted with the detection apparatus. Alternatively, the object may be a space range at which the secondary node is located. For example, it is assumed that the secondary node is a smart home device. The object may be a room at which the smart home device is located, or the like. Alternatively, the object may be a user bound to the secondary node. For example, it is assumed that the secondary node is a headset, a wearable device, or the like. The object may be a user to which the headset or the wearable device belongs. Alternatively, the object may be a location of the secondary node. It may be understood that the description of the object bound to the secondary node herein is merely an example, and does not constitute a limitation on embodiments of this application.

The third identification information of the group to which the secondary node belongs may include, for example, a unique number or a name of the group. The group may be, for example, a device group or a cluster of the secondary node.

The type information of the secondary node may include, for example, a device model of the secondary node.

The attribute information of the secondary node may include, for example, a color, a function, or a self-defined name of the secondary node, or a service type supported by the secondary node.

It may be understood that the description of the feature information of the secondary node is merely an example, and does not constitute a limitation on embodiments of this application.

After the feature information of the secondary node has been configured on the primary node, the primary node may send a broadcast message including indication information of the feature information. For example, the indication information may be, for example, feature information, or a character indicating the feature information. This is not limited in embodiments of this application. For ease of description, the indication information of the feature information of the secondary node is described as feature indication information of the secondary node in the following.

In a possible implementation, if feature information of a plurality of secondary nodes is configured on the primary node, the sent broadcast message may include feature indication information of the plurality of secondary nodes.

In a possible implementation, the feature information of the secondary node is indicated in a vendor-defined data field of the broadcast message. For ease of understanding, an SLB communication technology is used as an example. In the SLB communication technology, networking of a communication system may be implemented by using a device discovery solution in the *SparkLink Wireless Communication System-Basic Service Layer-Device Discovery and Service Management v1.0.0.* This standard defines a data type of "vendor-defined data" of device public information of a discovered device party. In this embodiment of this application, the primary node sends the broadcast message, so that the secondary node can discover the primary node based on the broadcast message. Therefore, the discovered device party is the primary node. In view of this, the vendor-defined data field may be configured on the broadcast message sent by the primary node, and the field carries data of the data type of "vendor-defined data", where the data includes the feature indication information of the secondary node.

For example, refer to Table 1. A format of the vendor-defined data is shown as an example.

**Table 1**

| Data type | Data length | Description |
|---|---|---|
| Vendor-defined data | Variable length, where a minimum length is 2 bytes | Bytes 0 and 1: vendor identifier |
| | | Bytes 2 to 255: data content |

It can be learned from Table 1 that the format of the vendor-defined data includes three items: the data type, the data length, and the specific content description. The data type may be represented by using a character specified in the standard. This is not limited in embodiments of this application. The data length indicates a length of specific content. The data length is variable, where the minimum length is 2 bytes and a maximum length is 256 bytes. A specific value of the data length may be set during specific application. For example, the data length of the vendor-defined data field in the broadcast message sent by the primary node is set based on an actual requirement. A specific content description in the format of the vendor-defined data may include the vendor identifier and the specific data content (for example, including the feature indication information of the secondary node). The vendor identifier may occupy 2 bytes: 0 and 1, of the data length. The specific data content may occupy 254 bytes from 2 to 255 of the data length.

For example, based on the format of the vendor-defined data, there may be a plurality of implementations for a structure of the vendor-defined data field filled in the broadcast message sent by the primary node. The following describes examples of several structures of the vendor-defined data field. For a more detailed description, the following uses an example in which the sent broadcast message includes the feature indication information of the plurality of secondary nodes.

In a possible implementation, feature information of the plurality of secondary nodes is feature information of a same type. For example, based on the foregoing description, it can be learned that the feature information of the secondary node may include at least one or more of the following five items: the first identification information, the second identification information, the third identification information, the type information of the secondary node, and the attribute information of the secondary node. For example, the feature information of the secondary node includes one of the five items. If the feature information of the plurality of secondary nodes is information of a same item in the five items, for example, the first identification information or the second identification information, the feature information of the plurality of secondary nodes is of a same type. Alternatively, for example, if the plurality of secondary nodes belong to devices of a same type, for example, cameras, speakers, or atmosphere lights, types of the feature information of the plurality of secondary nodes are the same.

When the feature information of the plurality of secondary nodes is feature information of a same type, for example, refer to FIG. 5 for the structure of the vendor-defined data field. It can be seen from FIG. 5 that the vendor-defined data field may include a data type, a data length, and specific description content. The specific description content includes a vendor identifier and feature indication information (feature indication information 1 and feature indication information 2 shown in FIG. 5) of a plurality of secondary nodes. The vendor identifier occupies 2 bytes. Because types of feature information of the plurality of secondary nodes are the same, a length of bytes occupied by feature indication information of each secondary node is fixed. The fixed length of bytes may be, for example, 8 bytes or another specified length. This is not limited in embodiments of this application. Alternatively, in another possible implementation, a length of bytes occupied by the feature indication information of the plurality of secondary nodes may be variable, and is specifically set based on an actual application requirement. This is not limited in embodiments of this application.

In another possible implementation, the feature information of the plurality of secondary nodes includes a plurality of types of feature information. For example, the feature information of the secondary node still includes one of the foregoing five items. In the feature information of the plurality of secondary nodes, feature information of some secondary nodes is information of one of the five items, and feature information of some secondary nodes is information of another one of the five items. For example, feature information of some secondary nodes is the first identification information, feature information of some secondary nodes is the second identification information, and the like. In this case, the feature information of the plurality of secondary nodes includes the plurality of types of feature information.

Alternatively, for example, if the plurality of secondary nodes include a plurality of types of devices, for example, the plurality of secondary nodes include three types of devices: a camera, a speaker, and an atmosphere light, the types of the feature information of the plurality of secondary nodes include feature types corresponding to the three types of devices. In other words, three types are included: a type of feature information of the camera, a type of feature information of the speaker, and a type of feature information of the atmosphere light. It may be understood that, herein is merely an example. For the devices of the plurality of types, refer to the description about specific forms of the secondary nodes in the description of FIG. 1. Details are not described herein again.

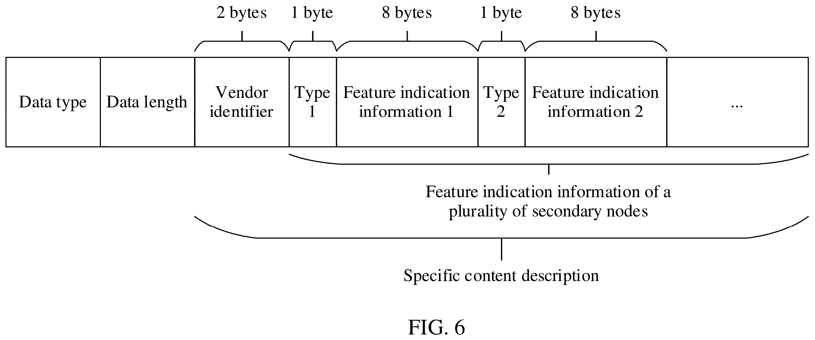

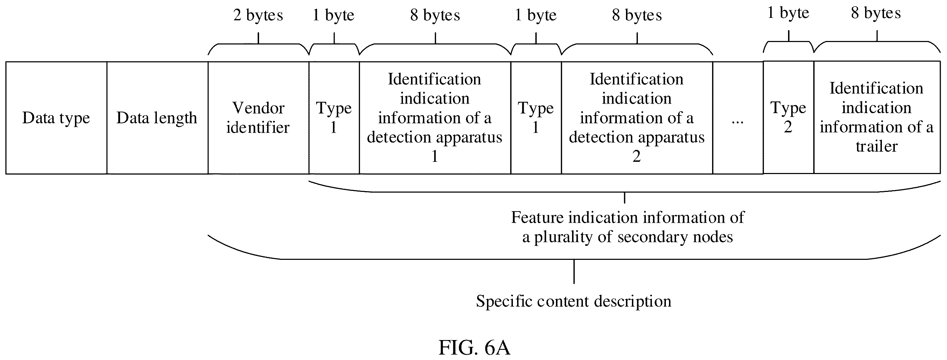

When the feature information of the plurality of secondary nodes includes the plurality of types of feature information, for example, for the structure of the vendor-defined data field, refer to FIG. 6. It can be seen from FIG. 6 that, in comparison with the structure shown in FIG. 5, because the plurality of types of feature information are included, a description of a type of feature information is added to the feature indication information of the plurality of secondary nodes. For example, if feature information indicated by the feature indication information 1 is a type 1, description information of the type 1 may be added to the structure of the vendor-defined data field. For example, refer to FIG. 6. The description information of the type 1 may occupy 1 byte or occupy bytes of another specified length. This is not limited in embodiments of this application. Similarly, if feature information indicated by the feature indication information 2 is a type 2, description information of the type 2 may be added to the structure of the vendor-defined data field. For example, refer to FIG. 6. The description information of the type 2 may occupy 1 byte or occupy bytes of another specified length. This is not limited in embodiments of this application. This is similar for another type of feature information. Details are not described again.

In a possible implementation, if the second identification information (or the third identification information) included in the feature information of the plurality of secondary nodes is the same, the broadcast message needs to include only one piece of the second identification information (or one piece of the third identification information).

For better understanding of the structure shown in FIG. 6, for example, refer to FIG. 6A. In FIG. 6A, it is assumed that the primary node is the tractor shown in FIG. 2, and the secondary node includes the plurality of detection apparatuses mounted on the truck shown in FIG. 2. In this case, the broadcast message sent by the tractor includes feature information of the plurality of detection apparatuses. It is assumed that feature information of each detection apparatus includes first identification information of the detection apparatus and second identification information of a bound object (that is, the trailer shown in FIG. 2). In this case, the broadcast message sent by the tractor may include the first identification information of each of the plurality of detection apparatuses, and the identification information of the trailer. Because trailers bound to the plurality of detection apparatuses are the same, identification information of trailers included in the feature information of the detection apparatuses is the same. Therefore, the broadcast message needs to include identification information of only one trailer. In view of this, a diagram of the structure of the vendor-defined data field in the broadcast message shown in FIG. 6A may be obtained. It can be seen that the description part of the feature indication information of the plurality of secondary nodes includes identification indication information of the plurality of detection apparatuses such as the detection apparatus 1 and the detection apparatus 2 (only two detection apparatuses are schematically shown in FIG. 6A) and a type (for example, it is assumed that the type is the type 1) corresponding to the plurality of detection apparatuses. The identification indication information of the detection apparatuses indicates first identification information of the corresponding detection apparatuses. In addition, the part further includes identification indication information of the trailer and a type (for example, it is assumed that the type is a type 2) corresponding to the trailer. The identification indication information of the trailer indicates the identification information of the trailer. It may be understood that FIG. 6A is merely an example, and does not constitute a limitation on embodiments of this application. Placement locations of the identification indication information of the detection apparatuses and the trailer and the types of the identification indication information of the detection apparatuses and the trailer may be determined based on actual application. This is not limited in embodiments of this application. For example, in another possible implementation, the identification indication information of the trailer and the type of the identification indication information of the trailer may be placed between the vendor identifier and the type 1 corresponding to the identification indication information of the detection apparatus 1.

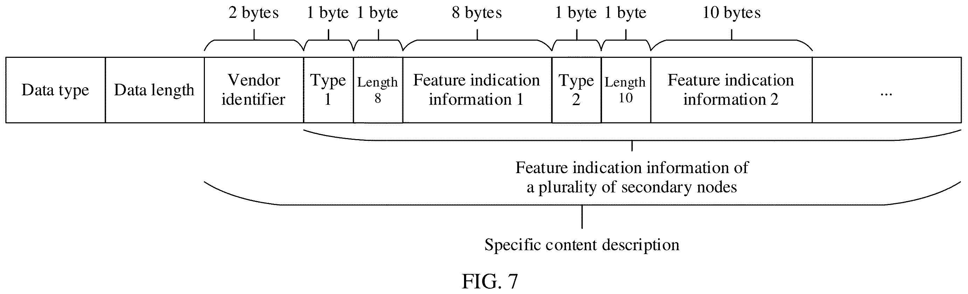

In addition, in FIG. 6, lengths of bytes occupied by feature indication information with different types of feature information are fixed (for example, 8 bytes). In another possible implementation, the lengths of bytes occupied by the feature indication information with the different types of feature information may be variable. For example, refer to a diagram of a structure shown in FIG. 7. It can be seen from FIG. 7 that, in comparison with the structure shown in FIG. 6, because the lengths of the bytes occupied by the feature indication information with the different types of feature information are variable, a description of a length of the feature information is added to the feature indication information of the plurality of secondary nodes. For example, it is assumed that a length of the feature indication information 1 is 8 bytes, description information of the length may be added to the structure of the vendor-defined data field. For example, refer to FIG. 7. The description information of the length may occupy 1 byte or occupy bytes of another specified length. This is not limited in embodiments of this application. Similarly, it is assumed that a length of the feature indication information 2 is 10 bytes, description information of the length may be added to the structure of the vendor-defined data field. For example, refer to FIG. 7. The description information of the length may also occupy 1 byte or occupy bytes of another specified length. This is not limited in embodiments of this application. This is similar for another type of feature information. Details are not described again.

It may be understood that the description of the structure of the vendor-defined data field is merely an example, and does not constitute a limitation on embodiments of this application.

In a possible implementation, the primary node may send the broadcast message by using an access stratum.

S402: The secondary node receives the broadcast message.

After the primary node sends the broadcast message, the secondary node may receive the broadcast message.

S403: The secondary node sends a connection request message to the primary node based on the feature information indicated by the broadcast message.

After receiving the broadcast message, the secondary node may parse the broadcast message to obtain information (referred to as first target information for short) in the vendor-defined data field in the broadcast message. Then, it is determined whether the first target information includes the feature indication information of the secondary node. For example, if the feature indication information of the secondary node is the feature information of the secondary node, the feature information of the secondary node is preconfigured on the secondary node. Therefore, the secondary node may obtain the feature information of the secondary node, and compare the feature information of the secondary node with the first target information. If the first target information includes the feature information of the secondary node, the first target information includes the feature indication information of the secondary node. On the contrary, if the first target information does not include the feature information of the secondary node, the first target information does not include the feature indication information of the secondary node.

Alternatively, for example, if the feature indication information of the secondary node is a character indicating the feature information of the secondary node, an association relationship between the character and the feature information of the secondary node is preconfigured on the secondary node. Therefore, the secondary node may obtain the character, and compare the character with the first target information. If the first target information includes the character, the first target information includes the feature indication information of the secondary node. On the contrary, if the first target information does not include the character, the first target information does not include the feature indication information of the secondary node.

If the obtained first target information does not include the feature indication information of the secondary node, the secondary node may ignore or discard the received broadcast message.

If the obtained first target information includes the feature indication information of the secondary node, the secondary node may learn that the primary node sending the broadcast message is a node to which a communication connection is established. Therefore, the connection request message may be sent to the primary node.

S404: The primary node receives the connection request message, and establishes the communication connection to the secondary node based on the connection request message.

After the secondary node sends the connection request message, the primary node may receive the connection request message, and in response to the connection request message, establish the communication connection to the secondary node. For a specific process of establishing the communication connection, refer to, for example, a corresponding communication standard or various communication connection methods optimized and improved according to the communication standard. This is not limited in embodiments of this application.

In conclusion, in this embodiment of this application, the feature information of the secondary node is indicated in the broadcast message of the primary node. In this way, the secondary node learns that the broadcast message is a message to which the secondary node needs to respond, and therefore filters out a broadcast message of another primary node. This can accurately implement a communication connection between the secondary node and the primary node, and reduce interference.

In a possible implementation, establishing the communication connection between the secondary node and the primary node is establishing a data communication channel between the secondary node and the primary node. The secondary node may send check information to the primary node through the data communication channel, to check whether a communication status of the data communication channel is normal. During specific implementation, the primary node may pre-store the check information or pre-store information indicated by the check information. For example, the primary node pre-stores the check information. After receiving the check information sent by the secondary node, the primary node may compare the check information with the pre-stored check information. If the two pieces of information are consistent, it indicates that the communication status of the data communication channel is good, and data communication can be normally implemented. On the contrary, if the two pieces of information are inconsistent, it indicates that the communication status of the data communication channel is poor, and there is even a risk of information leakage. Therefore, the primary node may disconnect the communication connection from the secondary node. For example, the check information may be, for example, the feature information of the secondary node, or the check information indicates the feature information of the secondary node. In this implementation, the feature information of the secondary node stored in the primary node may be repeatedly used. This reduces additional overheads of performing communication check based on other different information.

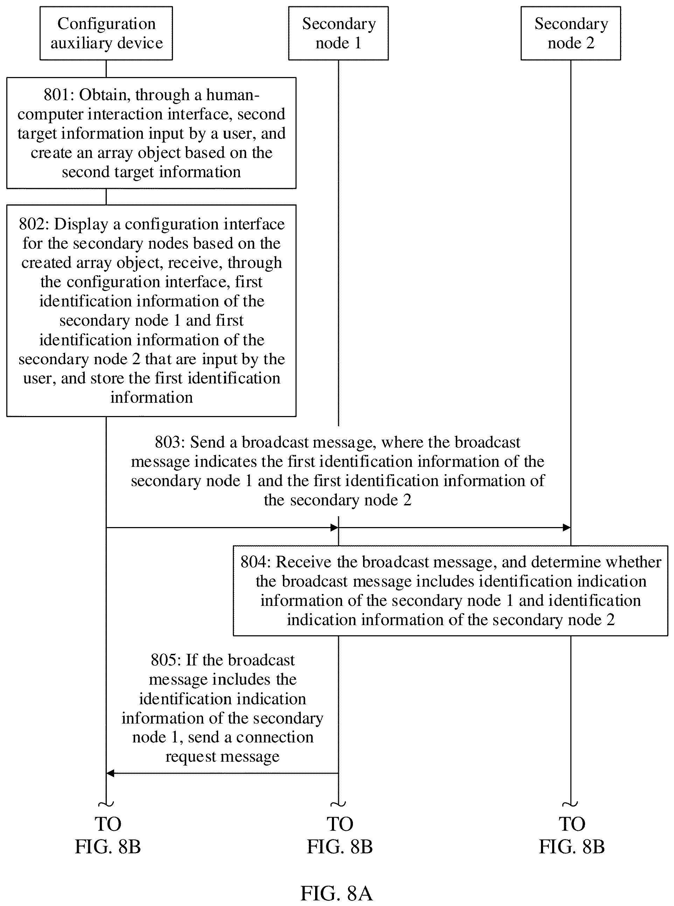

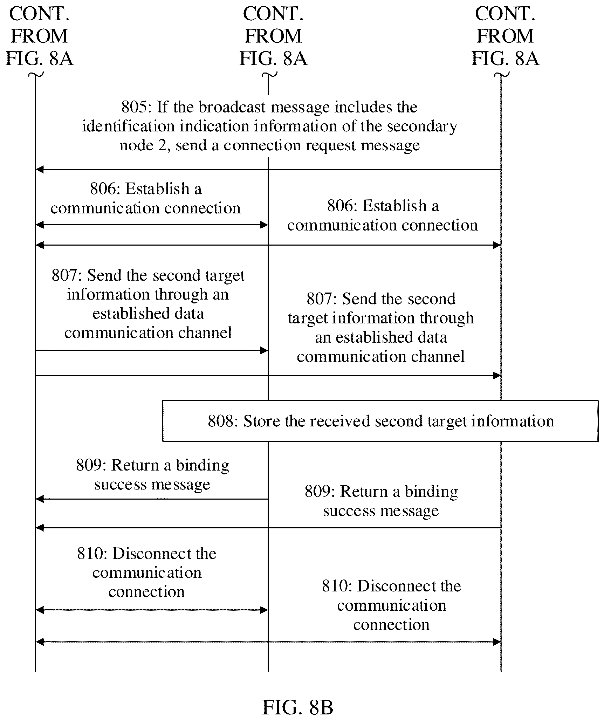

In a possible implementation, based on the foregoing description, it can be learned that feature information of the secondary node is configured on the secondary node. For example, the feature information of the secondary node may be configured on the secondary node before delivery. Alternatively, the feature information of the secondary node may be configured on the secondary node during actual application process. For this configuration manner, refer to the following description of FIG. 8A and FIG. 8B and a possible implementation of FIG. 8A and FIG. 8B. Details are not described herein. If the primary node needs to disconnect the communication connection from the secondary node, for example, the primary node receives an instruction, input by the user, to disconnect the connection, the primary node may first send deletion indication information to the secondary node through the established data communication channel. The deletion indication information indicates deletion of the feature information of the secondary node. After receiving the deletion indication information, the secondary node may delete, in response to the information, the feature information stored in the secondary node, to release storage space of the secondary node. After the deletion succeeds, the secondary node may return a deletion success indication message to the primary node. The primary node obtains, based on the indication message, that the secondary node has successfully deleted the corresponding feature information, and then disconnects the communication connection from the secondary node. In another possible implementation, before disconnecting the communication connection from the secondary node, the primary node also deletes the feature information of the secondary node stored in the primary node, to release storage space of the primary node.

In a possible implementation, based on the foregoing description, it can be learned that the networking method provided in embodiments of this application is proposed for a communication connection interference problem existing in a device discovery solution in which a secondary node discovers a primary node. Therefore, the primary node sends the broadcast message indicating the feature information of the secondary node. The secondary node does not send the broadcast message indicating the feature information of the secondary node. In other words, the secondary node does not broadcast the feature information of the secondary node.

In a possible implementation, the primary node has a human-computer interaction interface for configuring the feature information of the secondary node, and the secondary node does not have a human-computer interaction interface. For example, the human-computer interaction interface may include a human-machine interaction interface, a human-computer speech interaction interface, a keyboard, a mouse, or the like. Alternatively, for example, the human-computer interaction interface of the primary node is not limited to a human-computer interaction interface built in the primary node, and a human-computer interaction interface extended by the primary node may be further included. For example, the primary node may be extended to connect to a display or communicate with a terminal device having a human-computer interaction interface. In this case, the display connected through extension and the human-computer interaction interface of the terminal device are also human-computer interaction interfaces of the primary node. A manner or an implementation form in which the primary node has the human-computer interaction interface is not limited in embodiments of this application.

In the foregoing implementation, because the primary node has the human-computer interaction interface, the feature information of the secondary node may be configured on the primary node through the human-computer interaction interface. In this way, the primary node can add the feature indication information of the secondary node to the broadcast message. In addition, because the secondary node does not have the human-computer interaction interface, in a scenario in which broadcast messages of a plurality of primary nodes are received at the same time, the primary node to which the communication connection is established cannot be selected manually. The feature indication information of the secondary node carried in the broadcast message may help the secondary node accurately determine the primary node to which the communication connection is established, thereby eliminating interference from the another primary node.

The following describes an example of an implementation process of configuring the feature information of the secondary node on the primary node.

In a possible implementation, if the feature information of the secondary node includes one or more of the first identification information, the type information of the secondary node, and the attribute information of the secondary node, the feature information of the secondary node may be configured on the primary node in the following manners.

In a first manner, if a device housing or a mounting position of the secondary node includes an exposed identification object like a user-recognizable nameplate or silkscreen, and the object like the nameplate or silkscreen includes the feature information of the secondary node, the user can perform recording in a manner like copying or shooting. Then, the recorded feature information is manually configured on the primary node through the human-computer interaction interface supported by the primary node.

In a second manner, a device housing or a mounting position of the secondary node includes a matrix two-dimensional code (for example, a QR code) or a tag (for example, an NF Tag) that can uniquely identify an object. In addition, the feature information of the secondary node may be obtained through parsing from the matrix two-dimensional code or the tag. In this case, a terminal device like a mobile phone may perform scanning and identification. For example, after scanning the matrix two-dimensional code or the tag, the terminal device may identify corresponding feature information, and display the feature information to the user. Then, the identified feature information is manually configured on the primary node through the human-computer interaction interface supported by the primary node. Alternatively, for example, the terminal device may communicate with the primary node. After identifying the corresponding feature information, the terminal device may send the feature information to the primary node. After receiving the feature information, the primary node may store the feature information to complete configuration of the feature information.

In a third manner, a terminal device like a mobile phone may access the secondary node by using a wireless communication technology like an SLB or sparklink low energy (Sparklink Low Energy, SLE) technology. Then, the feature information stored in the secondary node is read. For example, after reading the feature information, the terminal device may display the feature information to the user. Then, the identified feature information is manually configured on the primary node through the human-computer interaction interface supported by the primary node. Alternatively, for example, the terminal device may further communicate with the primary node. After reading the corresponding feature information, the terminal device may send the feature information to the primary node. After receiving the feature information, the primary node may store the feature information to complete configuration of the feature information.

In a possible implementation, if the feature information of the secondary node includes second target information, the second target information includes the second identification information of the object bound to the secondary node or the third identification information of the group to which the secondary node belongs. The second target information may be configured on the primary node in the following manners.

For example, if the second target information is the second identification information of the object bound to the secondary node, and the object has an exposed identification object that can be identified by the user, the user can perform recording in a manner like copying or shooting. Then, the recorded second identification information is manually input into the primary node through the human-computer interaction interface of the primary node. The primary node stores the input information. For example, if the object is a device like the trailer described above, the exposed identification object may be, for example, a nameplate or a silkscreen of the trailer. Alternatively, if the object is a room or the like in which the secondary node is located, the exposed identification object may be, for example, a room number of the room. It may be understood that the description is merely an example, and does not constitute a limitation on embodiments of this application.

For example, the second target information is the second identification information of the object bound to the secondary node or the third identification information of the group to which the secondary node belongs, and the object or the group has no exposed identification object that can be identified by the user. In this case, if the second identification information of the object or the third identification information of the group is preset, the preset second identification information or the preset third identification information may be manually input into the primary node through the human-computer interaction interface. Alternatively, the user may customize corresponding identification information for the object or the group, and may manually input the customized identification information into the primary node through the human-computer interaction interface. The primary node stores the input information. It may be understood that the description is merely an example, and does not constitute a limitation on embodiments of this application.

In a possible implementation, if the feature information of the secondary node includes the second target information, and the second target information is not configured on the secondary node before delivery, in the actual application process, the second target information may be configured on the secondary node in the following configuration manner, to complete binding of the secondary node to the second target information.

This configuration manner may be completed by using a configuration auxiliary device. For example, the configuration auxiliary device may be the foregoing primary node, or may be a terminal device having a human-computer interaction interface. For example, refer to FIG. 8A and FIG. 8B. A specific configuration process is described by using two secondary nodes (secondary node 1 and secondary node 2 for short) as an example. The configuration process may include but is not limited to the following steps.

801: The configuration auxiliary device obtains, through the human-computer interaction interface, the second target information input by the user, and creates an array object based on the second target information.

During specific implementation, the second target information, that is, second identification information of objects bound to the secondary nodes (for example, including the secondary node 1 and the secondary node 2) or third identification information of a group to which the secondary nodes belong, may be input by the user to the configuration auxiliary device through the human-computer interaction interface of the configuration auxiliary device. For details, refer to the foregoing description of configuring the second identification information or the third identification information on the primary node. Details are not described herein again.

After receiving, through the human-computer interaction interface, the second target information input by the user, the configuration auxiliary device may create the corresponding array object based on the second target information. The array object is a data structure associated with the second target information, and may be used to store at least one of first identification information, type information, or attribute information of the secondary nodes bound to the object. The following uses an example in which the array object is used to store the first identification information of the secondary nodes for description.

802: The configuration auxiliary device displays a configuration interface for the secondary nodes based on the created array object, receives, through the configuration interface, the first identification information of the secondary node 1 and the first identification information of the secondary node 2 that are input by the user, and stores the first identification information.

After completing creation of the array object, the configuration auxiliary device may display the corresponding configuration interface. Then, the configuration auxiliary device may receive, through the configuration interface, the first identification information of the secondary node 1 and the first identification information of the secondary node 2 that are input by the user, and store the first identification information. It may be understood that, in another possible implementation, the first identification information of the secondary node 1 and the first identification information of the secondary node 2 may be input into the configuration auxiliary device through another type of human-computer interaction interface. Herein, only the configuration interface is used as an example.

803: The configuration auxiliary device sends a broadcast message, where the broadcast message indicates the first identification information of the secondary node 1 and the first identification information of the secondary node 2.

The configuration auxiliary device may send the broadcast message after completing storing of the received first identification information of the secondary node 1 and the received first identification information of the secondary node 2. Optionally, in response to an indication of the user, the configuration auxiliary device may send the broadcast message. The broadcast message carries indication information of the first identity information of the secondary node 1 and indication information of the first identity information of the secondary node 2. For specific implementation, refer to related descriptions of the foregoing step S401. Details are not described herein again.

804: The secondary node 1 and the secondary node 2 receive the broadcast message, and determine whether the broadcast message includes identification indication information of the secondary node 1 and identification indication information of the secondary node 2.

For specific implementation of this step, refer to related descriptions of the foregoing step S402 and step S403. Details are not described herein again.

805: If the broadcast message includes the identification indication information of the secondary node 1 and identification indication information of the secondary node 2, the secondary node 1 and the secondary node 2 send connection request messages.

For specific implementation of this step, refer to related descriptions of the foregoing step S403. Details are not described herein again.

806: The configuration auxiliary device establishes a communication connection separately with the secondary node 1 and the secondary node 2.

For specific implementation of this step, refer to related descriptions of the foregoing step S404. Details are not described herein again.

807: The configuration auxiliary device sends the second target information to the secondary node 1 and the secondary node 2 separately through an established data communication channel.

During specific implementation, it is assumed that the configuration auxiliary device establishes a data communication channel 1 with the secondary node 1, and establishes a data communication channel 2 with the secondary node 2. In this case, the configuration auxiliary device may send the second target information to the secondary node 1 through the data communication channel 1. The configuration auxiliary device may send the second target information to the secondary node 2 through the data communication channel 2.

808: The secondary node 1 and the secondary node 2 store the received second target information.

After receiving the second target information, the secondary node 1 and the secondary node 2 may store the second target information to complete binding.

809: The secondary node 1 and the secondary node 2 return binding success messages to the configuration auxiliary device.

Then, the secondary node 1 and the secondary node 2 may send the binding success messages to the configuration auxiliary device, to notify the configuration auxiliary device that a binding operation is successfully completed.

810: The configuration auxiliary device disconnects the communication connection separately from the secondary node 1 and the secondary node 2.

Because the configuration auxiliary device mainly assists binding of the secondary node 1 and the secondary node 2 to the second target information, after learning that binding of the secondary node 1 and the secondary node 2 has been completed, the configuration auxiliary device may disconnect the communication connections from the secondary node 1 and the secondary node 2.

In another possible implementation, if the feature information of the secondary node includes one or more of the first identification information, the type information of the secondary node, and the attribute information of the secondary node, and the information is not configured on the secondary node before delivery, the information may also be configured on the secondary node in the actual application process, and binding of the secondary node to the information is completed. For example, the configuration manner may also be completed by using the configuration auxiliary device. Different from configuration of the second target information on the secondary node in FIG. 8A and FIG. 8B, step 801 and the operation of "displaying a configuration interface for the secondary nodes based on the created array object" in step 802 may not be performed. In response to a configuration instruction input by the user, the configuration auxiliary device may display the configuration interface for the secondary node. Then, the feature information of the secondary node input by the user is received through the configuration interface, and is stored. For a subsequent specific configuration implementation process, refer to related descriptions of step 803 to step 810 in FIG. 8A and FIG. 8B. Details are not described herein again.

It may be understood that the foregoing implementation of configuring the information on the primary node or the secondary node is merely an example, and does not constitute a limitation on embodiments of this application.

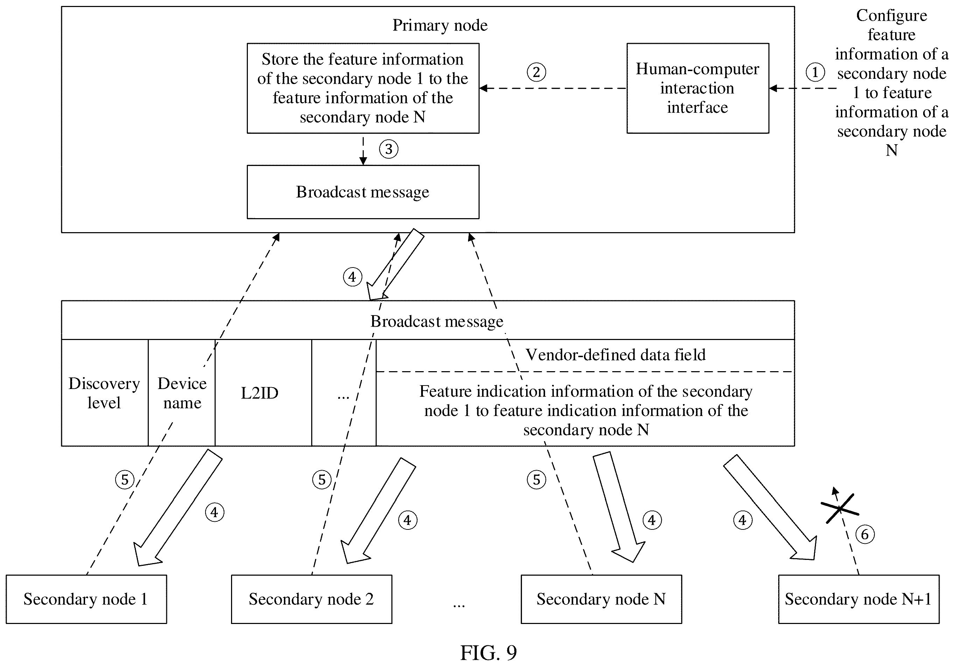

With reference to the foregoing description, in a possible implementation, FIG. 9 is a diagram of an overall logical framework of a networking method according to an embodiment of this application. It can be seen from FIG. 9 that, a primary node may receive, through a human-computer interaction interface, feature information of a secondary node 1 to feature information of a secondary node N that are configured and input by a user. Refer to ① in FIG. 9. Then, refer to ② shown in FIG. 9. After receiving the feature information of the secondary node 1 to the feature information of the secondary node N through the human-computer interaction interface, the primary node stores the feature information. Then, refer to ③ and ④ shown in FIG. 9. The primary node may generate and send a broadcast message. The broadcast message may include content like a discovery level, a device name (that is, a name of the primary node), an L2ID (that is, an identifier used for media access stratum addressing), and feature indication information of the secondary node 1 to feature indication information of the secondary node N that are included in a vendor-defined data field. The secondary node 1 to a secondary node N+1 may receive the broadcast message. Refer to ⑤ shown in FIG. 9. Because the secondary node 1 to the secondary node N may find the feature indication information of the secondary node 1 to the feature indication information of the secondary node N in the broadcast message, the secondary node 1 to the secondary node N may determine that the primary node sending the broadcast message is a node to which communication connections are established, and further send connection request messages to the primary node. Refer to ⑥ shown in FIG. 9. The secondary node N+1 does not find feature indication information of the secondary node N+1 in the broadcast message, the secondary node N+1 may determine that the primary node sending the broadcast message is not a node to which a communication connection is established, and do not send a connection request message to the primary node.

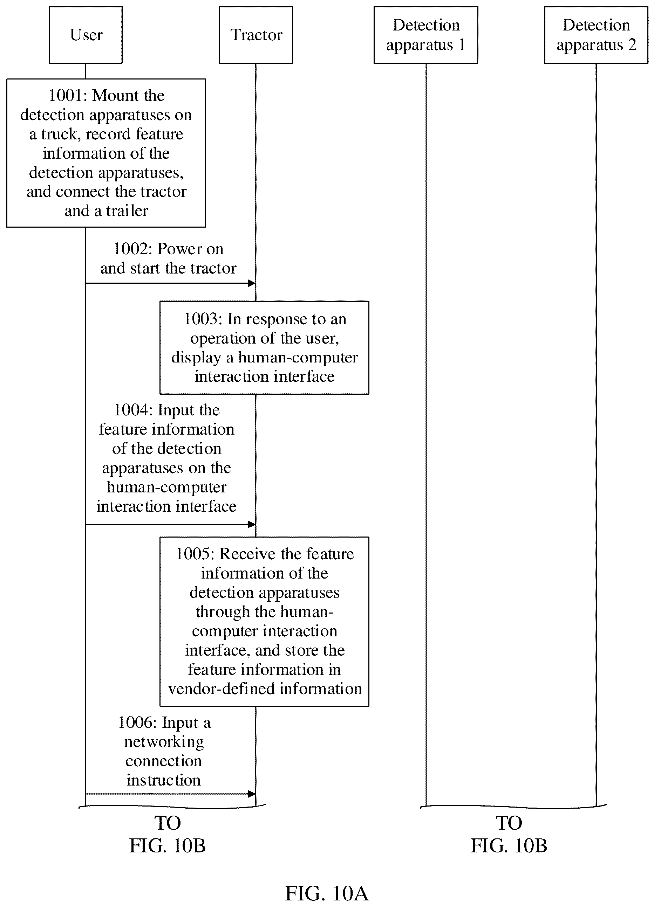

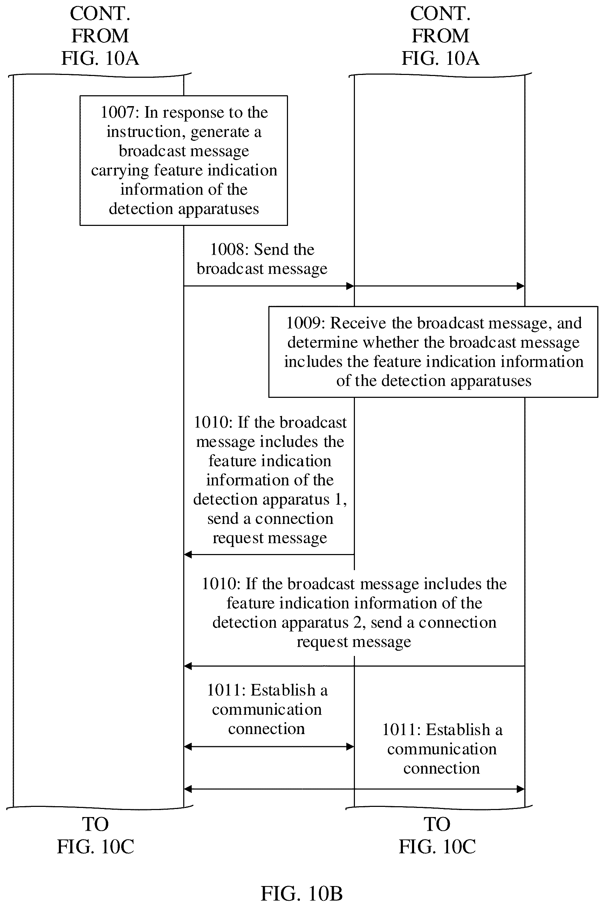

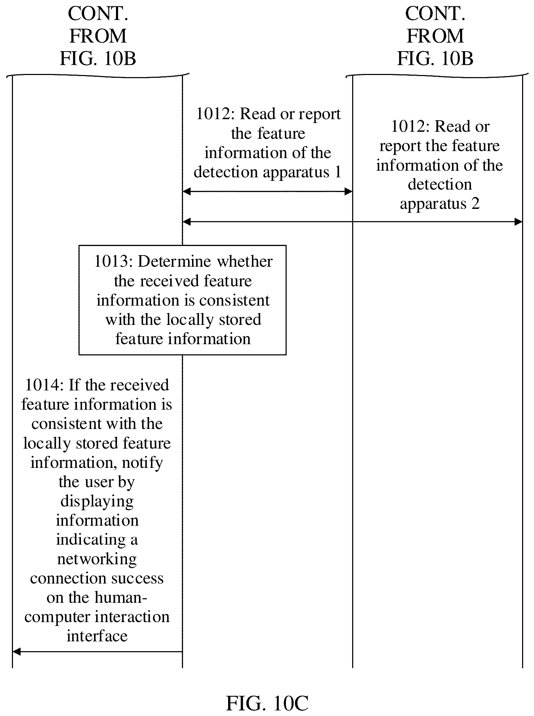

The following further describes, by using an example, a process of actually applying the foregoing networking method based on the application scenario in which the tractor of the truck establishes the communication connections to the detection apparatuses shown in FIG. 2. The following provides example descriptions with reference to FIG. 10A to FIG. 12. FIG. 10A to FIG. 12 use the two detection apparatuses (that is, the detection apparatus 1 and the detection apparatus 2) as examples. The actual application process requires participation of a user. Therefore, FIG. 10A to FIG. 12 also illustrate related operation steps of the user as examples.

First, refer to FIG. 10A to FIG. 10C. In step 1001, the user may mount the detection apparatuses on the truck and record the feature information of the detection apparatuses, and further need to connect the tractor and the trailer. The connection between the tractor and the trailer is a physical connection, and the tractor may power the trailer.

In step 1002, the user may power on and start the tractor. Because the trailer and the detection apparatuses may be powered by the tractor, after the tractor is powered on, the trailer and the detection apparatuses may also be powered on and started. Alternatively, after the tractor is powered on, the user turns on power-on switches of the trailer and the detection apparatuses, and powers on the trailer and the detection apparatuses.

In step 1003, in response to an operation of the user, the tractor may display, a human-computer interaction interface used to configure feature information of the detection apparatuses.

In step 1004, the user may input the feature information of the detection apparatuses (that is, the detection apparatus 1 and the detection apparatus 2) on the human-computer interaction interface.

In step 1005, the tractor receives the feature information of the detection apparatuses through the human-computer interaction interface, and stores the feature information in vendor-defined information. Vendor-defined information of one type may be defined in the tractor, and the feature information of the detection apparatus 1 and the feature information of the detection apparatus 2 are stored as the vendor-defined information.

In step 1006, the user may input a networking connection instruction on the tractor. For example, the instruction may be input by performing an operation like tapping a related networking connection button or control on the human-computer interaction interface.

For step 1007 to step 1011, refer to related descriptions of step S401 to step S404. Details are not described herein again.

In step 1012, after establishing the communication connections to the detection apparatus 1 and the detection apparatus 2, the tractor may actively read the feature information of the detection apparatus 1 and the feature information of the detection apparatus 2, or the detection apparatus 1 and the detection apparatus 2 report the feature information of the detection apparatus 1 and the feature information of the detection apparatus 2 to the tractor, to check whether communication statuses of established data communication channels are normal.

In step 1013, the tractor may determine whether the received feature information is consistent with locally stored feature information. For specific descriptions of step 1012 and step 1013, refer to related descriptions of sending the check information by the secondary node to the primary node. Details are not described herein again.

In step 1014, if determining that the received feature information is consistent with the locally stored feature information, the tractor may notify the user by displaying information indicating a networking connection success on the human-computer interaction interface.

It may be understood that the foregoing merely describes an example of an implementation process of actually applying the networking method provided in this embodiment of this application, and does not constitute a limitation on embodiments of this application.

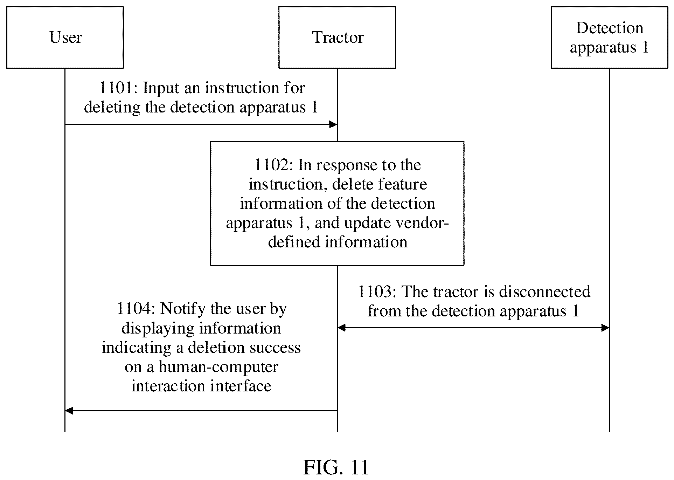

For example, after the foregoing networking succeeds, if a detection apparatus needs to be deleted from a networked communication system, refer to a process shown in FIG. 11. In FIG. 11, deleting the detection apparatus 1 is used as an example.

In step 1101 shown in FIG. 11, the user may input, on the tractor, an instruction for deleting the detection apparatus 1. For example, the instruction may be input by performing an operation like tapping a related delete button or control on the human-computer interaction interface.

In step 1102, in response to the instruction, the tractor deletes locally stored feature information of the detection apparatus 1, and updates the vendor-defined information. Because the feature information of the detection apparatus 1 is deleted, the vendor-defined information no longer includes the feature information of the detection apparatus 1. Therefore, the vendor-defined information needs to be updated.

In step 1103, after deleting the feature information of the detection apparatus 1, the tractor may disconnect the communication connection from the detection apparatus 1. A specific interaction process of disconnecting the communication connection is not limited in embodiments of this application.

In step 1104, after disconnecting the communication connection from the detection apparatus 1, the tractor may notify the user by displaying information indicating a deletion success on the human-computer interaction interface.

It may be understood that the foregoing merely describes an example of an implementation process of deleting the secondary node from the communication system during actual application, and does not constitute a limitation on embodiments of this application.

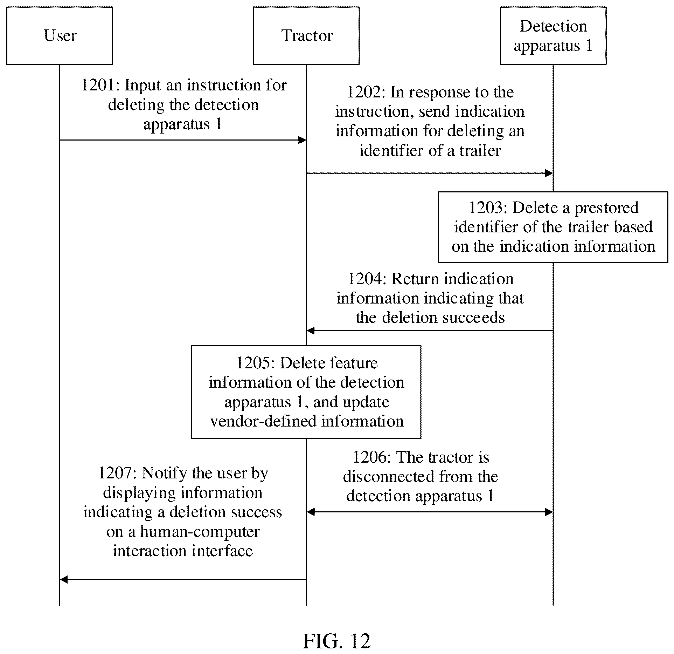

For example, if the to-be-deleted detection apparatus 1 is a detection apparatus bound to the trailer, and an identifier of the trailer is configured on the detection apparatus 1, the identifier of the trailer is the second identification information of the object (that is, the trailer) bound to the secondary node (that is, the detection apparatus 1) described above. For example, the configuration may be performed in the manner shown in FIG. 8A and FIG. 8B. In this case, refer to a process shown in FIG. 12.

In step 1201 shown in FIG. 12, the user may input, on the tractor, an instruction for deleting the detection apparatus 1. For example, the instruction may be input by performing an operation like tapping a related delete button or control on the human-computer interaction interface.

In step 1202, in response to the instruction, the tractor may send, to the detection apparatus 1, indication information for deleting the identifier of the trailer.

In step 1203, the detection apparatus 1 deletes a prestored identifier of the trailer based on the indication information.

In step 1204, the detection apparatus 1 returns, that is, sends, to the tractor, indication information indicating that the deletion succeeds.

In step 1205, the tractor also deletes locally stored feature information of the detection apparatus 1, and updates the vendor-defined information. Because the feature information of the detection apparatus 1 is deleted, the vendor-defined information no longer includes the feature information of the detection apparatus 1. Therefore, the vendor-defined information needs to be updated.

In step 1206, after deleting the feature information of the detection apparatus 1, the tractor may disconnect the communication connection from the detection apparatus 1. A specific interaction process of disconnecting the communication connection is not limited in embodiments of this application.

In step 1207, after disconnecting the communication connection from the detection apparatus 1, the tractor may notify the user by displaying information indicating a deletion success on the human-computer interaction interface.

It may be understood that the foregoing merely describes an example of an implementation process of deleting the secondary node from the communication system during actual application, and does not constitute a limitation on embodiments of this application.

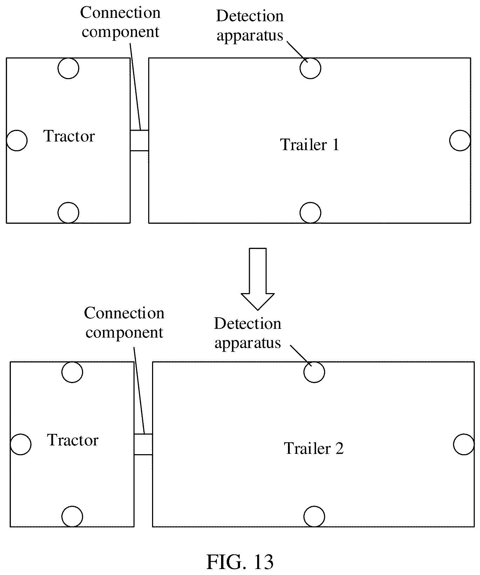

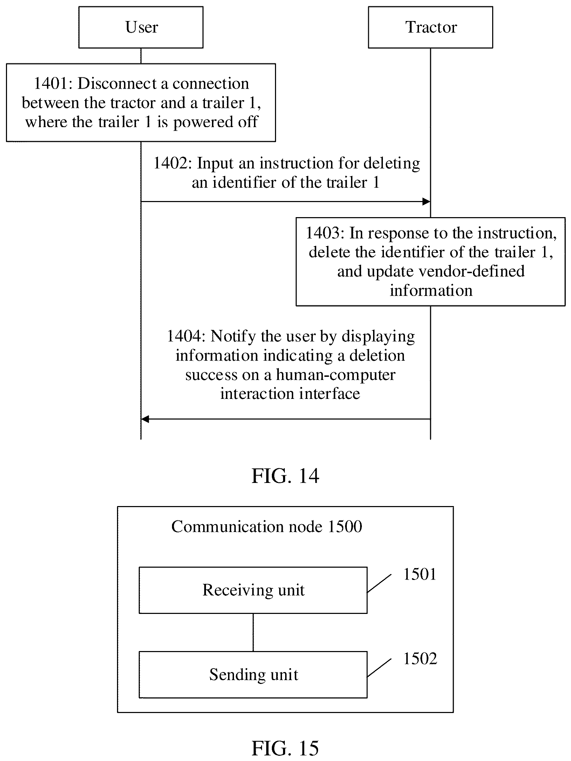

For example, after the foregoing networking based on the foregoing procedure in FIG. 10A to FIG. 10C succeeds, if the tractor needs to replace the trailer, all detection apparatuses on the trailer need to be deleted from the networked communication system. For ease of understanding, for example, refer to FIG. 13. In FIG. 13, the tractor is originally connected to a trailer 1, to power the trailer 1, provide power for the trailer 1, and the like. If the trailer connected to the tractor needs to be replaced with a trailer 2, a physical connection between the tractor and the trailer 1 may be first disconnected. Then, the trailer 2 and the tractor are connected together via a connection component, to power the trailer 2, provide power for the trailer 2, and the like. In the process of replacing the trailer, for an implementation process of deleting all detection apparatuses from the trailer 1 in the networked communication system, for example, refer to the process shown in FIG. 14.

In step 1401 shown in FIG. 14, the user may first disconnect the physical connection between the tractor and the trailer 1, where the trailer 1 is powered off. After the trailer 1 is powered off, the detection apparatus mounted on the trailer 1 is also correspondingly powered off. In this case, the detection apparatus mounted on the trailer 1 automatically disconnects a communication connection from the tractor.

In step 1402, after the physical connection between the tractor and the trailer 1 is disconnected, the user may input, on the tractor, an instruction for deleting an identifier of the trailer 1. For example, the instruction may be input by performing an operation like tapping a related delete button or control on the human-computer interaction interface.

In step 1403, in response to the instruction, the tractor deletes a locally stored identifier of the trailer 1, and updates the vendor-defined information. Because the identifier of the trailer 1 is deleted, the vendor-defined information no longer includes the identifier of the trailer 1. Therefore, the vendor-defined information needs to be updated.

In step 1404, the tractor may notify the user by displaying information indicating a deletion success on the human-computer interaction interface.

After unbinding the trailer 1 and the detection apparatus corresponding to the trailer 1, the tractor may be reconnected to another trailer, namely, the trailer 2, and establish a communication connection to a detection apparatus on the trailer 2. For a specific implementation process, refer to the description in FIG. 10A to FIG. 10C. Details are not described herein again.

In the foregoing implementation solution, a group of secondary nodes may be deleted simply and quickly. In comparison with an implementation solution in which each secondary node is deleted one by one, this solution is more convenient for the user to perform an operation. This reduces operation difficulty, and improves user experience.

It may be understood that the foregoing merely describes an example of an implementation process of deleting the group of secondary nodes from the communication system during actual application, and does not constitute a limitation on embodiments of this application. In another possible implementation, a group of to-be-replaced secondary nodes may be bound to another object or belong to a group. For example, the object bound to the group of to-be-replaced secondary nodes is a room, a user, or a location. For example, the group may be a device group or a cluster. This is not limited in embodiments of this application. In this case, if the primary node needs to replace the group of secondary nodes, adaptively refer to the process shown in FIG. 14. Details are not described again in embodiments of this application.

The foregoing mainly describes the networking method provided in embodiments of this application. It may be understood that, to implement the foregoing corresponding functions, each communication node includes a corresponding hardware structure and/or a corresponding software module for performing the functions. In combination with example units and steps described in embodiments disclosed in this specification, this application can be implemented by hardware or a combination of hardware and computer software. Whether a function is performed by hardware or hardware driven by computer software depends on particular applications and design constraint conditions of the technical solutions. Persons skilled in the art may use different methods to implement the described functions for each particular application, but it should not be considered that the implementation goes beyond the scope of this application.

In embodiments of this application, the communication node may be divided into functional modules based on the foregoing method examples. For example, functional modules corresponding to the functions may be obtained through division, or two or more functions may be integrated into one module. The integrated module may be implemented in a form of hardware, or may be implemented in a form of a software function module. It should be noted that, in embodiments of this application, division into the modules is an example and is merely logical function division, and may be other division in an actual implementation.

When each functional module is obtained through division based on each corresponding function, an embodiment of this application further provides a communication node configured to implement any one of the foregoing methods. For example, a communication node is provided, including a unit (or means) configured to implement the steps in any one of the foregoing methods.

For example, FIG. 15 is a diagram of a structure of a communication node 1500 according to an embodiment of this application. The communication node 1500 may be a secondary node configured to implement any embodiment of the foregoing networking method. The communication node 1500 may include a receiving unit 1501 and a sending unit 1502.

The receiving unit 1501 is configured to receive a broadcast message from a primary node. The broadcast message indicates feature information of the communication node 1500, the communication node 1500 is a node providing service content or a service, and the primary node is a node using the service content or the service. The receiving unit 1501 may be configured to perform the receiving operation in step S402 in FIG. 4.

The sending unit 1502 is configured to send a connection request message to the primary node based on the feature information indicated by the broadcast message. The connection request message is used to request to establish a communication connection to the primary node. The sending unit 1502 may be configured to perform the sending operation in step S403 in FIG. 4.

Optionally, the communication node 1500 does not broadcast the feature information.

In a possible implementation, the primary node has a human-computer interaction interface for configuring the feature information, and the communication node 1500 does not have a human-computer interaction interface.

In a possible implementation, the feature information includes at least one piece of the following content:
first identification information of the communication node 1500, second identification information of an object bound to the communication node 1500, third identification information of a group to which the communication node 1500 belongs, type information of the communication node 1500, or attribute information of the communication node 1500.

In a possible implementation, the feature information is indicated in a vendor-defined data field of the broadcast message.

In a possible implementation, the sending unit 1502 is further configured to: send check information to the primary node after the communication node 1500 establishes the communication connection to the primary node. The check information indicates the feature information, and the check information is used to check a status of communication between the communication node 1500 and the primary node.

In a possible implementation, the feature information is configured on the communication node 1500. The receiving unit 1501 is further configured to receive deletion indication information. The communication node further includes a deletion unit that is configured to delete the feature information based on the deletion indication information.

For specific operations and beneficial effect of the units in the communication node 1500 shown in FIG. 15, refer to the corresponding descriptions in FIG. 4 and the possible embodiment of FIG. 4. Details are not described herein again.

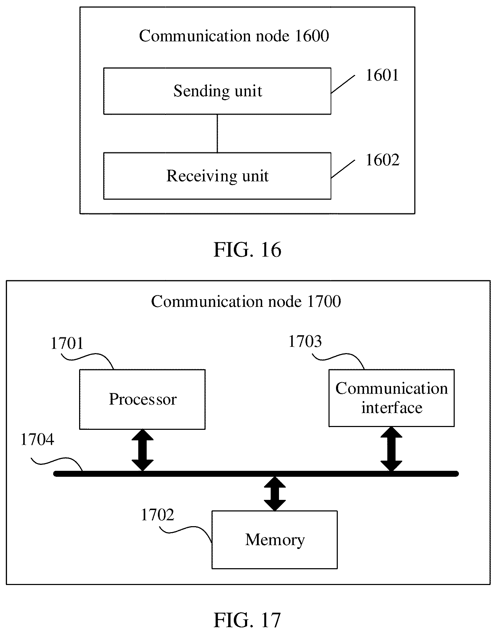

For example, FIG. 16 is a diagram of a structure of a communication node 1600 according to an embodiment of this application. The communication node 1600 may be a primary node configured to implement any embodiment of the foregoing networking method. The communication node 1600 may include a sending unit 1601 and a receiving unit 1602.

The sending unit 1601 is configured to send a broadcast message. The broadcast message indicates feature information of a secondary node, the secondary node is a node providing service content or a service, and the communication node is a node using the service content or the service. The sending unit 1601 may be configured to perform the sending operation in step S401 in FIG. 4.

The receiving unit 1602 is configured to receive a connection request message from the secondary node. The connection request message is used to request to establish a communication connection to the communication node 1600. The receiving unit 1602 may be configured to perform the receiving operation in step S404 in FIG. 4.

Optionally, the secondary node does not broadcast the feature information.

In a possible implementation, the communication node 1600 has a human-computer interaction interface for configuring the feature information, and the secondary node does not have a human-computer interaction interface.

In a possible implementation, the feature information includes at least one piece of the following content:
first identification information of the secondary node, second identification information of an object bound to the secondary node, third identification information of a group to which the secondary node belongs, type information of the secondary node, or attribute information of the secondary node.

In a possible implementation, the feature information is indicated in a vendor-defined data field of the broadcast message.

In a possible implementation, the receiving unit 1602 is further configured to: receive check information from the secondary node after the secondary node establishes the communication connection to the communication node 1600. The check information indicates the feature information, and the check information is used to check a status of communication between the secondary node and the communication node 1600.

In a possible implementation, the feature information is configured on the secondary node. The sending unit 1601 is further configured to send deletion indication information to the secondary node. The deletion indication information indicates deletion of the feature information.

For specific operations and beneficial effect of the units in the communication node 1600 shown in FIG. 16, refer to the corresponding descriptions in FIG. 4 and the possible embodiment of FIG. 4. Details are not described herein again.

For example, FIG. 17 is a diagram of a structure of a possible physical entity of a communication node according to this application. The communication node 1700 shown in FIG. 17 may be a secondary node configured to implement any embodiment of the foregoing networking method. The communication node 1700 includes a processor 1701, a memory 1702, and a communication interface 1703. The processor 1701, the communication interface 1703, and the memory 1702 may be connected to each other or connected to each other through a bus 1704.

For example, the memory 1702 is configured to store a computer program and data of the communication node 1700. The memory 1702 may include but is not limited to a random access memory (random access memory, RAM), a read-only memory (read-only memory, ROM), an erasable programmable read-only memory (erasable programmable read-only memory, EPROM), or a compact read-only memory (compact disc read-only memory, CD-ROM).

Software or program code required for all or some of the functions of the communication node in the foregoing method embodiments may be stored in the memory 1702.

In a possible implementation, if software or program code required for some of the functions is stored in the memory 1702, the processor 1701, in addition to invoking the program code in the memory 1702 to implement some functions, may cooperate with another component (for example, the communication interface 1703) to jointly complete another function (for example, a data receiving or sending function) described in the method embodiments.

There may be a plurality of communication interfaces 1703, configured to support the communication node 1700 to perform communication, for example, receive or send data or a message.

For example, the processor 1701 may be a circuit having a data processing capability. In an implementation, the processor may be a circuit that has a capability of reading and running instructions, for example, a central processing unit (central processing unit, CPU), a microprocessor, a graphics processing unit (graphics processing unit, GPU) (may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit implemented by using an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (tensor processing unit, TPU), or a deep learning processing unit (deep learning processing unit, DPU). Alternatively, the processor 1701 may be a combination of at least two of these processor forms, or the like.

The processor 1701 may be configured to read the program stored in the memory 1702, to perform an operation performed by the secondary node in FIG. 4 and the possible embodiment of FIG. 4.

For specific operations and beneficial effect of the units in the communication node 1700 shown in FIG. 17, refer to the corresponding descriptions in FIG. 4 and the possible embodiment of FIG. 4. Details are not described herein again.

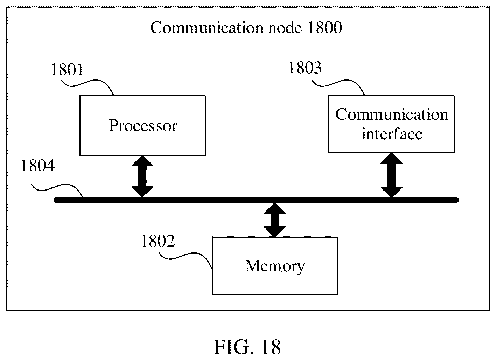

For example, FIG. 18 is a diagram of a structure of a possible physical entity of a communication node according to this application. The communication node 1800 shown in FIG. 18 may be a primary node configured to implement any embodiment of the foregoing networking method. The communication node 1800 includes a processor 1801, a memory 1802, and a communication interface 1803. The processor 1801, the communication interface 1803, and the memory 1802 may be connected to each other or connected to each other through a bus 1804.

For example, the memory 1802 is configured to store a computer program and data of the communication node 1800. The memory 1802 may include but is not limited to a random access memory (random access memory, RAM), a read-only memory (read-only memory, ROM), an erasable programmable read-only memory (erasable programmable read-only memory, EPROM), or a compact read-only memory (compact disc read-only memory, CD-ROM).

Software or program code required for all or some of the functions of the communication node in the foregoing method embodiments may be stored in the memory 1802.

In a possible implementation, if software or program code required for some of the functions is stored in the memory 1802, the processor 1801, in addition to invoking the program code in the memory 1802 to implement some functions, may cooperate with another component (for example, the communication interface 1803) to jointly complete another function (for example, a data receiving or sending function) described in the method embodiments.

There may be a plurality of communication interfaces 1803, configured to support the communication node 1800 to perform communication, for example, receive or send data or a message.

For example, the processor 1801 may be a circuit having a data processing capability. In an implementation, the processor may be a circuit that has a capability of reading and running instructions, for example, a central processing unit (central processing unit, CPU), a microprocessor, a graphics processing unit (graphics processing unit, GPU) (may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit implemented by using an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (tensor processing unit, TPU), or a deep learning processing unit (deep learning processing unit, DPU). Alternatively, the processor 1801 may be a combination of at least two of these processor forms, or the like.

The processor 1801 may be configured to read the program stored in the memory 1802, to perform an operation performed by the primary node in FIG. 4 and the possible embodiment of FIG. 4.

For specific operations and beneficial effect of the units in the communication node 1800 shown in FIG. 18, refer to the corresponding descriptions in FIG. 4 and the possible embodiment of FIG. 4. Details are not described herein again.

An embodiment of this application further provides a computer-readable storage medium. The computer-readable storage medium stores a computer program or computer instructions, and the computer program or the computer instructions are executed by a processor to implement the method implemented by the secondary node in any implementation of FIG. 4 and the possible implementations thereof.

An embodiment of this application further provides a computer-readable storage medium. The computer-readable storage medium stores a computer program or computer instructions, and the computer program or the computer instructions are executed by a processor to implement the method implemented by the primary node in any implementation of FIG. 4 and the possible implementations thereof.

An embodiment of this application further provides a computer program product. When the computer program product is read and executed by a computer, the method implemented by the secondary node in any implementation of FIG. 4 and the possible implementations thereof is performed.

An embodiment of this application further provides a computer program product. When the computer program product is read and executed by a computer, the method implemented by the primary node in any implementation of FIG. 4 and the possible implementations thereof is performed.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the above descriptions use terms such as first and second to describe various elements, these elements should not be limited by the terms. These terms are simply used to distinguish one element from another.

It should also be understood that sequence numbers of processes do not mean execution sequences in embodiments of this application. The execution sequences of the processes should be determined based on functions and internal logic of the processes, and should not be construed as any limitation on the implementation processes of embodiments of this application.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should further be understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A communication system, wherein the communication system comprises a primary node and a secondary node, the secondary node is a node providing service content or a service, the primary node is a node using the service content or the service, and feature information of the secondary node is configured on the primary node;
the primary node sends a broadcast message, and the broadcast message indicates the feature information;
the secondary node receives the broadcast message;
the secondary node sends a connection request message to the primary node based on the feature information indicated by the broadcast message; and
the primary node receives the connection request message, and establishes a communication connection to the secondary node based on the connection request message.

2. The communication system according to claim 1, wherein the secondary node does not broadcast the feature information.

3. The communication system according to claim 1 or 2, wherein the primary node has a human-computer interaction interface for configuring the feature information, and the secondary node does not have a human-computer interaction interface.

4. The communication system according to any one of claims 1 to 3, wherein the feature information comprises at least one piece of the following content:
first identification information of the secondary node, second identification information of an object bound to the secondary node, third identification information of a group to which the secondary node belongs, type information of the secondary node, or attribute information of the secondary node.

5. The communication system according to any one of claims 1 to 4, wherein the feature information is indicated in a vendor-defined data field of the broadcast message.

6. The communication system according to any one of claims 1 to 5, wherein after the secondary node establishes the communication connection to the primary node, the secondary node sends check information to the primary node, and the check information indicates the feature information; and
the primary node receives the check information, and checks a status of communication with the secondary node based on the check information.

7. The communication system according to any one of claims 1 to 6, wherein the feature information is configured on the secondary node;
the primary node sends deletion indication information to the secondary node; and
the secondary node receives the deletion indication information, and deletes the feature information based on the deletion indication information.

8. A networking method, wherein the method comprises:
receiving, by a secondary node, a broadcast message from a primary node, wherein the broadcast message indicates feature information of the secondary node, the secondary node is a node providing service content or a service, and the primary node is a node using the service content or the service; and
sending, by the secondary node, a connection request message to the primary node based on the feature information indicated by the broadcast message, wherein the connection request message is used to request to establish a communication connection to the primary node.

9. The method according to claim 8, wherein the secondary node does not broadcast the feature information.

10. The method according to claim 8 or 9, wherein the primary node has a human-computer interaction interface for configuring the feature information, and the secondary node does not have a human-computer interaction interface.

11. The method according to any one of claims 8 to 10, wherein the feature information comprises at least one piece of the following content:
first identification information of the secondary node, second identification information of an object bound to the secondary node, third identification information of a group to which the secondary node belongs, type information of the secondary node, or attribute information of the secondary node.

12. The method according to any one of claims 8 to 11, wherein the feature information is indicated in a vendor-defined data field of the broadcast message.

13. The method according to any one of claims 8 to 12, wherein the method further comprises:
sending, by the secondary node, check information to the primary node after the secondary node establishes the communication connection to the primary node, wherein the check information indicates the feature information, and the check information is used to check a status of communication between the secondary node and the primary node.

14. The method according to any one of claims 8 to 13, wherein the feature information is configured on the secondary node, and the method further comprises:
receiving, by the secondary node, deletion indication information, and deleting the feature information based on the deletion indication information.

15. A networking method, wherein the method comprises:
sending, by a primary node, a broadcast message, wherein the broadcast message indicates feature information of a secondary node, the secondary node is a node providing service content or a service, and the primary node is a node using the service content or the service; and
receiving, by the primary node, a connection request message from the secondary node, wherein the connection request message is used to request to establish a communication connection to the primary node.

16. The method according to claim 15, wherein the secondary node does not broadcast the feature information.

17. The method according to claim 15 or 16, wherein the primary node has a human-computer interaction interface for configuring the feature information, and the secondary node does not have a human-computer interaction interface.

18. The method according to any one of claims 15 to 17, wherein the feature information comprises at least one piece of the following content:
first identification information of the secondary node, second identification information of an object bound to the secondary node, third identification information of a group to which the secondary node belongs, type information of the secondary node, or attribute information of the secondary node.

19. The method according to any one of claims 15 to 18, wherein the feature information is indicated in a vendor-defined data field of the broadcast message.

20. The method according to any one of claims 15 to 19, wherein the method further comprises:
receiving, by the primary node, check information from the secondary node after the secondary node establishes the communication connection to the primary node, wherein the check information indicates the feature information, and the check information is used to check a status of communication between the secondary node and the primary node.

21. The method according to any one of claims 15 to 20, wherein the feature information is configured on the secondary node, and the method further comprises:
sending, by the primary node, a deletion indication information to the secondary node, wherein the deletion indication information indicates deletion of the feature information.

22. A communication node, wherein the communication node comprises:
a receiving unit, configured to receive a broadcast message from a primary node, wherein the broadcast message indicates feature information of the communication node, the communication node is a node providing service content or a service, and the primary node is a node using the service content or the service; and
a sending unit, configured to send a connection request message to the primary node based on the feature information indicated by the broadcast message, wherein the connection request message is used to request to establish a communication connection to the primary node.

23. A communication node, wherein the communication node comprises:
a sending unit, configured to send a broadcast message, wherein the broadcast message indicates feature information of a secondary node, the secondary node is a node providing service content or a service, and the communication node is a node using the service content or the service; and
a receiving unit, configured to receive a connection request message from the secondary node, wherein the connection request message is used to request to establish a communication connection to the primary node.

24. A communication node, wherein the communication node comprises a processor, a communication interface, and a memory, the communication interface is configured to implement data receiving and sending, the memory is configured to store a computer program or computer instructions, and the processor is configured to execute the computer program or the computer instructions stored in the memory, to enable the communication node to perform the method according to any one of claims 8 to 14.

25. A communication node, wherein the communication node comprises a processor, a communication interface, and a memory, the communication interface is configured to implement data receiving and sending, the memory is configured to store a computer program or computer instructions, and the processor is configured to execute the computer program or the computer instructions stored in the memory, to enable the communication node to perform the method according to any one of claims 15 to 21.

26. A computer-readable storage medium, wherein the computer-readable storage medium stores a computer program or computer instructions, and the computer program or the computer instructions are executed by a processor to implement the method according to any one of claims 8 to 14; or
the computer program or the computer instructions are executed by a processor to implement the method according to any one of claims 15 to 21.

27. A computer program product, wherein when the computer program product is executed by a processor, the method according to any one of claims 8 to 14 is implemented; or
when the computer program product is executed by a processor, the method according to any one of claims 15 to 21 is implemented.
